# NEW EUROPEAN PATENT SPECIFICATION

(11) **EP 0 792 325 B2**
(45) Date of publication and mention of the opposition decision: **11.04.2007**
(45) Mention of the grant of the patent: 18.08.1999
(21) Application number: 95937209.5
(22) Date of filing: 15.11.1995
(51) Int. Cl.: C09D 5/03

(54) **PROCESS FOR COATING A SUBSTRATE WITH A POWDER PAINT COMPOSITION**
VERFAHREN ZUR BESCHICHTUNG EINES SUBSTRATES MIT EINER PULVERLACKZUSAMMENSETZUNG
PROCEDE DE REVETEMENT D'UN SUBSTRAT A L'AIDE D'UNE COMPOSITION DE PEINTURE EN POUDRE

(30) Priority: 16.11.1994 EP 94203336
(43) Date of publication of application: 03.09.1997
(73) Proprietor: Koninklijke DSM N.V., 6411 TE Heerlen (NL); MICHAEL HUBER MÜNCHEN GMBH, 85551 Kirchheim (DE)
(72) Inventor: HANDELS, Johannes, Wendelinus, Hubertus, NL-6101 KE Echt (NL); STEEMAN, Paulus, Antonius, Maria, NL-6166 JR Geleen (NL); SCHULZE-HAGENEST, Detlef, D-85630 Grasbrunn (DE); HUBER, Burkard, D-85551 Kirchheim (DE)
(74) Representative: Jacobs, Monique S.N.
(86) International application number: PCT/NL1995/000390
(87) International publication number: WO 1996/015199

(56) References cited:
- EP-A- 0 260 638
- EP-A- 0 476 647
- EP-A- 0 493 076
- GB-A- 2 097 701
- US-A- 2 990 278
- US-A- 4 147 127
- US-A- 5 243 392
- DATABASE WPI Derwent Publications Ltd., London, GB; AN 72-40800T[25] & JP,B,47 021 712 (KANZAKI SEISHI KK)
- PATENT ABSTRACTS OF JAPAN vol. 013, no. 516 (C-656) 17 November 1989 & JP,A,01 210 472 (MITSUI ENG & SHIPBUILD CO. LTD. ET AL) 24 August 1989

## Description

The invention relates to a process for coating a metal substrate with a powder paint composition.

In the powder paint industry, powder paints are usually electrically charged by means of a corona discharge or tribocharging. Then the powder paint is electrostatically applied to the object to be coated. In general, the electrostatic; spraying technique involves use of corona and/or tribo charging guns as described in, for example, Misev "Powder Coatings Chemistry and Technology", pages 324-344, John Wiley, 1991.

Powder paints are being considered for use in the coil coating industry. Coil coating is a special application method in which coiled metal strips are unwound and then passed through pretreating, coating, and drying equipment before finally being rewound. Coil coating allows for very efficient coating of large surface areas in a short time at high throughput. However, the inherent limitation In powder paint spray gun capacity imposes restrictions on the rate of application of powder paints to the coil and on the reliability of the coil coating process. Hence, there is a strong need in this industry for a high speed but yet rellable continuous process for the application of powder coatings.

This appears, for example, from "Coll Coatings Strategies in change" by G.C. Simmons Polymers Paint Colour Journal, July 28, 1993, page 373.

An object of the present invention is to provide an improved process for coating a powder paint on a metal substrate, at rapid rates (e.g. 100 metres of substrate/minute) while yielding a high quality coating. The process must also offer the possibility to treat large surface areas simultaneously.

The invention is characterized in that powder paint particles are first charged by friction or induction in the presence of magnetic or non-magnetic particles, are next transported and are then applied to a transfer medium by means of an electric field between the transfer medium and the means of transport, and subsequently transferred and applied to the substrate, whereafter the powder paint composition is cured or fused to form a coating. The powder coating adheres to the substrate.

The powder paint particles are first applied to the transfer medium by means of an electric field, transported to the substrate by the means of transfer medium and then applied to the substrate by, for example, electrical, electrostatic or mechanical forces. Thermal processes can also be used In this application step.

The present process allows powder paint particles to be applied to substrates at rates up to, for instance, 200 meters of substrate/minute with film thicknesses of the cured film of between for example, 3 and 200 µm. Moreover, this process satisfies the need to eliminate multiple spray guns in a coil coating process.

The process according to the invention results in a substantially (e.g. more than 90%) fully coated substrate. In contrast, in, for example, a printing process the coverage is, for example, only 10% of the substrate.

The charging of the powder paint particles by friction or induction, the transporting or conveying and the application to substrates can be effected using processes commonly known in photocopying technology or laser printer technology (which processes are elucidated in, for example, LB. Schein, Electrography and Development Physics, pages 32-244, Volume 14, Springer Series in Electrophysics 1988).

The powder paint particles are mixed with magnetic or non-magnetic carrier particles to obtain friction charging whereupon the mixture is transported and the powder paint particles are applied to the substrate by means of an electric field between the substrate and the means of transport.

The powder paint composition may comprise any one of the known binder systems such as, for example, described by Misev, "Powder Coatings, Chemistry and Technology" (John Wiley and Sons, 1991), pages 9-171.

The powder paint composition can be tribo-modified, as described in, for example, US-A-5124387.

The powder paint composition can, if desired, comprise usual additives such as fillers, pigments, antioxidants, stabilizers, flow agents, catalysts and triboadditives as described in, for instance, US-A-5342723. The powder paint composition can also, for example, comprise additives for flow control purposes or for charge control purposes as described, for instance, in US-A-4960666.

The powder paint compositions can, for example, be prepared and characterized as described in, for example, the aforementioned Misev on pages 224-283. The selection of grinding, classifying and sieving equipment is important for obtaining the desired particle size of the powder paint particles.

The binder system can be a thermosetting or a thermoplastic system. Preferably, the binder system for the powder paint is a thermosetting binder system.

Various types of curing reactions can be employed in thermosetting powder coatings for instance as disclosed in the afore mentioned Misev and radical curing systems such as UV-curing systems and electron beam curing systems. In many cases the thermosetting powder paint compositions comprise a binder system consisting of a resin and a crosslinker. Suitable resins include, for example, polyester resins, acrylic resins and alkyd resins.

Examples of suitable binders are: saturated carboxylated polyester resin / triglycidylisocyanurate (TGIC), saturated carboxylated polyester resin / epoxy resin, saturated carboxylated polyester resin / crosslinker containing hydroxylamide group, saturated carboxylated polyester resin / aliphatic oxirane, saturated hydroxylated polyester resin / isocyanate, polyester resin/ diglycidyl phtalate containing crosslinker, saturated hydroxylated polyester resin / hexamethoxy-methylmelamine (HMMM), saturated hydroxylated polyester/glycoluril(derivative), saturated hydroxylated polyester/benzoguanamine (derivative), saturated hydroxylated polyester resin / amino resin, saturated hydroxylated polyester resin / phenolic resin, epoxy resin / amino resin, epoxy resin / phenolic resin, epoxy resin / anhydride, epoxy resin (selfcrosslinking), phenolic resin (selicrosslinking), epoxy ester resin / amino resin, amino resin / isocyanate, acrylamide resin (selicrosslinking), acrylic resin /hydroxy-functional compound, unsaturated acrylic resin (selfcrosslinking), unsaturated acrylic resin / vinylether, unsaturated polyester resin / vinylether and saturated epoxidized acrylic resin / dodecanedicarboxylic acid.

Preferred binder systems include a carboxylated polyester as resin and TGIC, an epoxy resin, a hydroxylamide group containing crosslinker (for example Primid™) or an aliphatic oxirane (as disclosed in EP-A-600546) as crosslinker. Other preferred binder systems include hydroxylated polyester resin with HMMM or an isocyanate group containing crosslinker, an epoxy resin with a phenolic resin crosslinker and an epoxy ester resin with an amino resin crosslinker.

Upon curing or fusing of a powder paint composition a powder coating is obtained.

The median particle size (by volume) of the powder paint particles X_{50.3} (as defined according to the description and notation at pages 12-14 of Mechanische Verfahrenstechnik by Prof. Rumpf (Carl Hansen Verlag, 1975)) can be for example below 200 µm, and preferably, is between 5 and 60 µm.

The selection of the particle size depends on for example the desired final coating thickness for a given application.

The particle size distribution can be as broad as it is in conventional powder paint technology.

Preferably, the particle size distribution is relatively narrow. More preferably, the ratio X_{75,3} : X_{25,3} < 3 (according to the definition in the aforementioned Rumpf), since the efficiency of the development step may vary with the particle size.

It is one of the advantages of the process according to the present invention, that it is possible to apply particles having median particle sizes between 5-30 µm. It is very difficult to apply these particles with conventional spray guns.

Carrier particles can be either magnetic or non-magnetic. Preferably, the carrier particles are magnetic particles.

Suitable magnetic carrier particles have a core of, for example, iron, steel, nickel, magnetite, γ-Fe₂O₃, or certain ferrites such as for example CuZn, NiZn, MnZn and barium ferrites. These particles can be of various shapes, for example, irregular or regular shape.

Generally, these carrier particles have a median particle size between 20 and 700 µm. Preferably, the carrier particle size distribution is narrow and more preferably the ratio X_{75,3}:X_{25,3} < 2.

Exemplary non-magnetic carrier particles include glass, non-magnetic metal, polymer and ceramic material.

Non-magnetic and magnetic carrier particles can have similar particle size.

Preferably the carrier core particles are coated or surface treated with diverse organic or inorganic materials to obtain, for example, desirable electrical, triboelectrical and/or mechanical properties. Inorganic materials are described in for example US-A-4925762 and US-A-5039587. Organic coating materials include, for example, polymers having fluor-, silicone-, acrylic-, styrene-acrylic, melamine- or urethane-group. Mixtures of these polymers can also be used. Preferably a fluor containing polymer is used as coating.

For coating the carrier particles, any suitable method to coat a thin or thick layer on a powder surface, such as, for example spray coating in a fluidized bed or dry coating in a rotary kiln, can be used.

The carrier coatings can comprise suitable fillers or additives to control for example, triboelectrical, electrical or mechanical properties of the carrier coating. For example conductive materials such as, for example, carbon black and metal powder or charge controlling material and flow improving materials can be used.

The carrier particles may be conductive (as described in for example US-A-4076857) or non-conductive.

The carrier particles can be conductive or non-conductive.

Preferably, carriers particles having high voltage break through are used so that high electric fields can be used between transport means and substrate or transfer media to achieve a thick powder layer.

A developer comprises powder paint particles and carrier particles. A development method is a way of developing and a development unit is a complete system comprising of, for example, a developer roller (transport medium), mixing screw(s), a supply device, blades, detectors and the like. Other examples are described in, for example, GB-A-2097701, US-A-4147127 and US-A-4131081.

In the present invention the development method can be either one-component or two-component. According to a preferred embodiment of the invention the two-component development method, in which the carrier particles are mixed with the powder paint particles is used.

Preferably, a combination of powder paint particles having a X_{50,3} below 80 µm and a X_{95,3} below 120 µm and carrier particles having a X_{50,3} below 180 µm and a X_{95,3}.below 200 µm is used.

More prelerably, a combination of powder paint particles having a X_{50.3} below 30 µm and above 5 µm and a X_{95.3} below 50 µm and carrier particles having a X_{50.3} below 180 µm and above 5 µm and a X_{95.3} below 200 µm is used.

In the two-component developer the amount of powder paint particles can be, for example, between 1 and 50 wt.% and preferably between 5 and 25 wt.% (relative to the amount of developer). It is an advantage of the process according to the invention that it is possible to use powder paint concentrations well in excess of 10 wt%. Consequently, the amount of carrier particles can be between 50 and 99% by weight (relative to the amount of developer) and preferably is between 75 wt.% and 95 wt.%.

The powder paint concentration can be externally or internally (in the development unit) controlled. External control can be effected by measurement of layer thickness of uncured or cured powder by, for example, optical, photothermical or dielectrical means. Internal control can be carried out in the developer station by means of powder paint concentration control by any suitable means like inductive control (see, for example, US-A-4147127 and US-A-4131081) or volume control.

In a two-component development method the powder paint particles are triboelectrically charged by intensive mixing and friction with the carrier particles.

In the process according to the present invention it is also possible to use a one component development method with the carrier particles being incorporated in the powder paint particles as disclosed in, for example, US-A-4803143 and US-A-4543312.

In a one-component development method the particles are charged by induction or friction, depending on the selection of the powder paint particles.

Both one- and two-component developers can be transported by magnetic, electric and/or mechanical transport.

Preferably, the means of transport is a conveying method.

The mixture is preferably conveyed by means of a magnetic roller as described in for example US-A-4460266. In addition to a magnetic brush apparatus also useful in the present process are, for example, non-magnetic cascade development (see page 94 of the reference of L.B. Schein), magnetic cascade development (as described in for example "The 9th I ntemational Congress on Advances in Non-Impact Printing Technologies/Japan Hardcopy'93, pages 133-140). In addition also transport by air, for example, powder cloud development can be used. An exemplary process is described in for example US-A-2725304. Also jumping (projection) development (see for example Electrophotography, Fourth International Conference, pages 207-228, Nov. 16-18, 1981) can be carried out.

When two-component developers are used, the parameters which are relevant for the process (such as, for example, powder paint concentration, development potential and machine parameters) can be chosen depending on the application. This may lead to batch developer replacement, e.g. after certain time intervals or if certain parameters are out of a control range. Preferably, continuous developer material replenishment, as described in, for example, US-A-4614165, can be used to avoid process interruption for batch replenishment.

The substrate is metal, such as for example aluminium, steel, electrogalvanised steel and hot dip galvanized steel. Preferably, the process according to the invention is effected with use of coil-coating substrates.

The substrate can have any desired shape such as and or sheet, i.e. continuous or discontinuous.

The substrate may be magnetic or non-magnetic. If a magnetic substrate and a magnetic developer are used, generally an intermediate transfer medium like a belt or a roller has to be placed between the magnetic roller and the substrate as for example disclosed in EP-A-354530.

A transfer medium is used between the transport means and the substrate. Any suitable transfer medium like metallic drums, dielectric drums, foil from metals or polymers like silicone rubber belts, as described in "Proceeding of IS&T's Seventh International Congress on Advances in Non Impact Printing Technologies", Vol. II, page 453-462, or composite materials can be used.

The process according to the present invention is preferably used in a coil-coating process or in a sheet-coating process. The coated substrates obtained with this sheet coating process can advantageously be used in the production of cans. Surprisingly, it was found that fully closed layers having a thickness of about 5 µm can easily be obtained with the process according to the invention whereas it is very difficult to obtain such layers with spraying techniques.

The process can also be used in a foil-coating process and furthermore in any process where a constant layer of powder paint has to be applied to a surface.

The pretreatment of substrates is important. Suitable pretreatment processes are discribed in, for example, "Pretreatment Processes and Materials" 1986 European Coil Coating Directory, pages 134-135.

The substrate can be pretreated or coated with for instance, a primer. Such a primer may be coated as a thin layer in wet form or by means of the process of the present invention.

Generally, more layers can be applied with or without intermediate fusing separately on the substrate or separately on the transfer medium and jointly transferred to the substrate.

A preferred process according to the present invention thus comprises charging of the powder paint particles by intensive mixing and friction with magnetic carrier particles, transport of carrier particles and powder paint particles with the aid of a magnetic roller and'subsequent application of the powder paint particles to a substrate by means of an electric field between the substrate and the magnetic roller, whereafter the powder paint composition is made to cure or to fuse to a powder coating using techniques known in the art.

In this preferred process a transfer medium is used as described previously.

The carrier particles may be dosed to a mixing arrangement in which, one or more means of intensive mixing such as, for example, worm wheels are present along with a magnetic roller. Suitable mixing arrangements are described in, for example, *Proceeding of IS&T's Seventh International Congress on "Advances in Non Impact Printing Technologies", Vol. 1, pages 259-265.

Next, an amount of powder paint particles is fed into the mixing arrangement which is selected so as to obtain a powder paint particles concentration of, for example, 5-15 wt% powder paint relative to the amount of carrier particles. In this way, a developer is formed.

During the intensive mixing and friction in the mixing arrangement, due to the action of the worm weels, the carrier particles and the powder paint particles become oppositely (tribo) electrically charged. A layer of electrically charged powder paint particles covers the carrier particles. The carrier particles subseguently act as carrier for the charged powder paint particles. Next, the developer is fed to the magnetic roller, on which a brush-like structure, also known as the magnetic brush, is formed. The magnetic roller transports the brush to the contact area with the transfer medium. In this way, powder paint particles, as well as carrier particles, become available at the contact area with the transfer medium. By applying a sufficiently strong electric field between the magnetic roller and the transfer medium the powder paint particles can be drawn from the brush to the transfer medium, onto which they adhere electrostatically. The powder paint particles are subsequently transported to the contact area of the transfer medium and the substrate and next transferred to the substrate via one of the aforementioned transfer processes.

Finally, the magnetic brush is scraped off the magnetic roller as it is returned into the mixing bin.

As a result, a layer of powder paint particles forms on the substrate, which layer is substantially free from carrier particles, and can then be cured Eventually an apparatus which can catch carrier particles can be introduced such as for example a catching equipment for residual carrier, as described in "Proceeding of IS&T Eighth International Congress on Advances in Non Impact Printing Technologies", pages 391-393. The thickness of said layer of powder paint particles can, for example, be controlled via the electric field strength between the magnetic roller and the substrate, the magnitude of the charge on the powder paint particles (e.g. by varying the concentration and the mixing time) and the roller speed.

JP-A-47-2172 discloses a process to obtain a coating on a paper substrate. The speed according to this process is only 10 m/min. In the present application the separation of the powder paint particles and the carrier particles and next the application of the powder paint particles to the specific substrate involves two separate process steps with intermediate transfer whereas in JP-A-47-21712 this is accomplished in a single process step.

Consequently an essential difference between the present application and JP-A-47-21712 is the presence of the transfer medium between the means of transport and the substrate in our application. Specifically JP-A-47-21712 discloses no transfer medium but only means of transport and JP-A-49-21712 does not give any suggestion for a transfer medium. The process according to JP-A-47-21712 cannot be applied for magnetic metal substrates because the contact between brush and substrate results in a transfer of both powder paint particles and carrier particles to the substrate whereas only the powder paint particles should be transferred.

The invention will be further described based on the following non-limiting examples.

### Examples

### Example I

### Production of a powder paint composition

A powder paint was prepared by premixing 558 parts of saturated carboxylated polyester resin, (Uralac P5010™, supplied by DSM Resins), 42 parts by weight of triglycidylisocyanurate (TGIC; Araldite PT 810™, supplied by Ciba Geigy Ltd.). 300 parts by weight of titanium dioxide, (Kronos 2160™, supplied by Kronos Titan GmbH). 9 parts by weight of flow control agent (Resiflow PV5™, supplied by Worlée-Chemie GmbH) and 4.5 parts of benzoin in a "Diosna" V-30 batch mixer until the mixture is uniform and next melt kneaded in a Buss-Ko-Kneader PLK 46, (case setting temperature 120-130°C; kneading screw temperature 50°; 60 r.p.m.).

The cooled extrudate was milled first in a hammer mill to a particle size < 3 mm and then fed into a fluidized bed mill (Condux CFSB), having a nozzle diameter of 4 mm. The material was milled with 5 bar overpressure air pressure at 1900 r.p.m. of the classifier wheel incorporated in the mill obtaining a powder paint with a median particle size of 24 µm and a ratio X_{75.3}/X_{25.3} ratio of 2.3.

### Example II

### Preparation of a carrier

998 parts by weight Cu-Zn-ferrite powder, having a median particle size of 81 µm and a ratio X_{75,3}/X_{25,3} of 1,32 (both measured with the laser granulometer Cilas HR 850), were dry coated with 2 parts by weight polyvinylidenedifluoride (Kynar 301 F™) by mixing both materials in a Lödige mixer and coating the polymer on the surface of the ferrite in a rotary kiln at 200°C under N₂-atmosphere to obtain a carrier with a medium size of 80 µm, a ratio X_{75.3}/X_{25.3} of 1.32, a resistance of 1.1*10¹⁰ Ohm at a potential of 10V and a break-through voltage above 1,000V (both measured in a c-meter of Epping GmbH).

### Example III

### Preparation of a developer I

11% by weight of the powder paint composition according to Example I and 89% by weight of the carrier according to Example II were mixed at room temperature intensively in a "Skandex" paint shaker for 5 minutes to obtain a developer. The charge distribution of the developer was measured in a q-meter of Epping GmbH showing a sharp charge over diameter (q/d)-distribution with a median of 2.2 fC/10 µm, a standard deviation of 1.7 fC/10 µm and 5.2% oppositely charged particles.

### Examples IV-VI

### Preparation of developers II, III and IV

A coated ferrite carrier having a median particle size of 53 µm and a ratio X_{75.3}/X_{25.3} of 1.47 (both measured with the laser granulometer Cilas HR 850), a resistance of 3.2*10¹⁰ Ohm at a potential of 10V and a break-through voltage over 1000V (both measured in a c-meter of Epping GmbH) was mixed with a powder paint composition according to Example I in a weight ratio carrier/powder paint 86/14, 80/20 and 75/25 to obtain the developers II, III and IV.

The charge distribution of the developers II and III was measured in a q/d-meter of Epping GmbH showing a sharp q/d distribution with a median of -7.5 and -5 fC/10 µm, a standard deviation of 2.6 and 1.7 fC/10 µm and 0.12 and 0.01 % oppositely charged particles, respectively.

### Example VII (Comparative)

### Coating on a substrate

The developer according to Example III was filled in a magnetic brush unit mounted in a distance of 2.5 mm of a rotating metal drum available as the Id-tester (developer life time tester) from Epping GmbH. On the rotating drum an aluminium sheet of 0.1 mm thickness was mounted. The rotation speed of the drum (i.e. coating speed) was 100 m/minute, the speed of the magnetic brush was 130 meter/minute in same direction as the drum. The doctor blade of the magnetic brush was adjusted to a distance of 1.5 mm to the magnetic roller The magnetic pole was adjusted -10 degrees compared to the line between both rotating axes. The development potential of the drum against the developer roller was set to 1000V. The coated aluminium sheet, obtained after one development step, was then cured in an oven at 200°C to obtain a homogeneous powder coating with an average coating thickness of 25 µm and a tolerance of less than ±10%.

### Example VIII-XI (Comparative)

### Coating on a substrate

Example VII was repeated and aluminium sheets were developed once or several times using the developers II-IV with the following results (in all cases the sheet was homogeneously coated):

**TABLE I**

| developer | coating speed | no. of developments | thickness |
|---|---|---|---|
| II | 60 m/min | 3 | 18-22 µm |
| III | 60 m/min | 1 | 15-20 µm |
| IV | 60/min | 1 | 30-35 µm |
| IV | 130 m/min | 2 | 40-45 µm |

### Example XII

### Preparation of a developer with low break-throuah voltage

A surface-oxidized, non-coated iron carrier of sponge shape having a median particle size of 154 µm and a ratio X_{75.3}/X_{25.3} of 1.21. (both measured with the laser granulometer Cilas HR 850), a resistance of 1.3*10¹⁰ Ohm at a potential of 10V and a breakthrough voltage of 275V (both measured in the c-meter of Epping GmbH) was mixed with a powder paint composition according to Example I, where additionally the fine part of the particle size distribution was reduced by a further classifying step, in a ratio carrier/powder paint of about 97/3 to obtain developer V. It was not possible to increase the break-through voltage of the developer significantly by increasing the powder paint concentrations in the developer.

### Example XIII (Comparative)

### Dependence on coating speed and brush speed and angle of magnetic field

Example VII was repeated and aluminium sheets were developed once using developer V with the following results (in all cases the development voltage was -400 V).

**TABLE II**

| coating speed | brush speed | angle of magnetic field | coating thickness |
|---|---|---|---|
| 7.8 m/min. | 45 m/min. | -15° | 60-80 µm |
| 15 m/min. | 60 m/min. | -15° | 30-60 µm |
| 7.8 m/min. | 45 m/min. | +5° | 10-15 µm |
| 7.8 m/min. | 45 m/min. | -15° | 30-40 µm |

### Example XIV

### Preparation of a powder paint composition

A clear powder paint was produced analogous to Example I by using 300 parts by weight of a polyester resin (Uralac P5051™, supplied by DSM Resins), 300 parts by weight crosslinker (Araldite GB 7004™, supplied by Ciba Geigy), 3 parts by weight of flow control agent (Byk 361 supplied by Byk Chemie) and 2 parts of benzoin.

A powder paint was achieved with a median particle size of 10.8 µm and a ratio X_{75.3}/X_{25.3} of 2.9.

### Example XV

### Preparation of a developer using a clear coat powder paint

Analogous to Example III a developer VI based on 155 parts by weight of the powder paint according to Example XIV and 845 parts by weight of carrier according to Example II was prepared.

### Example XVI (Comparative)

### Preparation of thin coatings

Analogous to example VII a sheet of aluminium was coated using developer VI (according to Example XIV) at a substrate speed of 30 m/min. and a brush speed of 78 m/min. with different development voltages. The results of the evaluation of the cured coating layers are listed below:

**TABLE III**

| dev. voltage | average coating layer thickness | result of evaluation |
|---|---|---|
| -1000V | 7.5 µm | high gloss, closed film |
| -800V | 3.5 µm | high gloss, closed film |

### Example XVII

### Heat transfer on a ferrous substrate

The developer according to Example XV was filled in a magnetic brush unit according to Example VII and then developed onto a rotating drum, which was coated with a 5 mm thick conductive coating of silicone rubber, filled with conductive carbon black. The coating speed of the drum was 30 m/min. and the speed of the magnetic brush 78 m/min. All other parameters were equal to those in example VII. The developed powder paint layer was then completely transferred to an iron foil of about 0.5 mm thickness; which was pressed to the rotating drum by a metal roller heated to 200°C and finally cured in an oven at 200°C to obtain a homogeneous powder coating film with an average coating thickness of 8 µm.

### Example XVIII

### Electrostatic transfer on a ferrous substrate

The developer according to Example XV was filled in a magnetic brush unit according to Example VII. The rotating drum was coated with a 5 mm thick conductive coating of silicone rubber filled with conductive carbon black and an additional isolating silicone rubber layer of 0.3 mm thickness (being defined by a blade prior to drying). The coating speed of the drum was 30 m/min., the speed of the magnetic brush was 78 m/min. All other parameters were equal to Example VII. The powder coating layer was then transferred to an iron foil of about 0.5 mm thickness to a great extent, which was led to the rotating drum by a metal roller where a potential of -500V against the rotating drum was applied and finally cured in an oven at 200°C to obtain a homogeneous coated film with an average coating thickness of about 7 µm.

## Claims

1. A process for coating a metal substrate with a powder paint composition, **characterized in that** powder paint particles are first charged by friction or induction in the presence of magnetic or non-magnetic particles, are next transported and are then applied to a transfer medium by means of an electric field between the transfer medium and the means of transport, and subsequently transferred and applied to the substrate, whereafter the powder paint composition is cured or fused to a powder coating.

2. A process according to Claim 1, **characterized in that** the particles are charged by friction.

3. A process according to any one of Claims 1-2, **characterized in that** the powder paint particles have a X_{50,3} below 80 µm and a X_{95.3} below 120 µm.

4. A process according to any one of Claims 1-3, **characterized in that** the powder paint particles have a X_{50,3} below 30 µm and above 5 µm and a X_{95,3} below 50 µm.

5. A process according to any one of Claims 1-4, **characterized in that** the powder paint particles have a ratio X_{75,3}:X_{25,3}〈 3.

6. A process according to any one of Claims 1-5, **characterized in that** the carrier particles have a X_{50,3} below 180 µm and above 5 µm and a X_{95,3} below 200 µm.

7. A process according to any one of claims 1-6, **characterized in that** the carrier particles have a ratio X_{75,3}:X_{25,3}〈 2.

8. A process according to any one of Claims 1-7, **characterized in that** the powder paint composition comprises a thermosetting binder system.

9. A process according to Claim 8, **characterized in that** the binder system comprises a carboxylated polyester resin and triglycidylisocyanurate, an epoxy resin, a hydroxylamide group containing crosslinker or an aliphatic oxirane as crosslinker, a hydroxylated polyester resin and hexamethoxymethylmelamine or an isocyanate group containing crosslinker, an epoxy resin with a phenolic resin crosslinker or an epoxy ester resin with an amino resin crosslinker.

10. A process according to any one of Claims 1-9, **characterized in that** the magnetic or non-magnetic carrier particles are selected from magnetic carrier particles consisting of a core of iron, steel, nickel, magnetite, γ-Fe₂O₃ or ferrites and non-magnetic carrier particles including glass, non-magnetic metal, polymer and ceramic material.

11. A process according to Claim 10, **characterized in that** the carrier particles are coated or surface treated.

12. A process according to any one of Claims 1-11, **characterized in that** the process comprises charging of the powder paint particles by intensive mixing and friction with magnetic carrier particles and transport of carrier particles and powder paint particles with the aid of a magnetic roller.

13. Use of a process according to any one of Claims 1-12 in a coil-coating process or in a sheet-coating process.

## Patentansprüche

1. Verfahren zur Beschichtung eines Metal Substrats mit einer Pulverlackzusammensetzung, **dadurch gekennzeichnet, daß** die Pulverlackteilchen zunächst durch Reibung oder Induktion in Anwesenheit von magnetischen oder nichtmagnetischen Teilchen aufgeladen werden, danach transportiert werden und dann mit Hilfe eines elektrischen Felds zwischen einem Übertragungsmedium und der Transportvorrichtung auf das Übertragungsmedium aufgebracht werden und anschließend auf das Substrat übertragen und aufgebracht werden, wonach die Pulverlackzusammensetzung zu einem Pulverlack gehärtet oder geschmolzen wird.

2. Verfahren nach Anspruch 1, **dadurch gekennzeichnet, daß** die Teilchen durch Reibung aufgeladen werden.

3. Verfahren nach einem der Ansprüche 1-2, **dadurch gekennzeichnet, daß** die Pulverlackteilchen einen X_{50,3}-Wert unter 80 µm und einen X_{95,3}-Wert unter 120 µm aufweisen.

4. Verfahren nach einem der Ansprüche 1-3, **dadurch gekennzeichnet, daß** die Pulverlackteilchen einen X_{50,3}-Wert unter 30 µm und über 5 µm und einen X_{95,3}-Wert unter 50 µm aufweisen.

5. Verfahren nach einem der Ansprüche 1-4, **dadurch gekennzeichnet, daß** die Pulverlackteilchen ein X_{75,3}:X_{25,3}-Verhältnis < 3 aufweisen.

6. Verfahren nach einem der Ansprüche 1-5, **dadurch gekennzeichnet, daß** die Trägerteilchen einen X_{50,3}-Wert unter 180 µm und über 5 µm und einen X_{95,3}-Wert unter 200 µm aufweisen.

7. Verfahren nach einem der Ansprüche 1-6, **dadurch gekennzeichnet, daß** die Trägerteilchen ein X_{75,3} : X_{25,3}-Verhältnis < 2 aufweisen.

8. Verfahren nach einem der Ansprüche 1-7, **dadurch gekennzeichnet, daß** die Pulverlackzusammensetzung ein wärmehärtendes Bindemittelsystem umfaßt.

9. Verfahren nach Anspruch 8, **dadurch gekennzeichnet, daß** das Bindemittelsystem ein carboxyliertes Polyesterharz und Triglycidylisocyanurat, ein Epoxidharz, einen hydroxylamidgruppenhaltigen Vernetzer oder ein aliphatisches Oxiran als Vernetzer, ein hydroxyliertes Polyesterharz und Hexamethoxymethylmelamin oder einen isocyanatgruppenhaltigen Vernetzer, ein Epoxidharz mit einem Phenolharz-Vernetzer oder ein Epoxyesterharz mit einem Aminoharz-Vernetzer umfaßt.

10. Verfahren nach einem der Ansprüche 1-9, **dadurch gekennzeichnet, daß** die magnetischen oder nichtmagnetischen Trägerteilchen augewählt sind aus magnetischen Trägerteilchen, bestehend aus einem Kern von Eisen, Stahl, Nickel, Magnetit, g-Fe₂O₃ oder Ferriten und nichtmagnetischen Trägerteilchen, einschließlich Glas, nichtmagnetischem Metall, Polymer und keramischem Material.

11. Verfahren nach Anspruch 10, **dadurch gekennzeichnet, daß** die Trägerteilchen beschichtet oder Oberflächen-behandelt werden.

12. Verfahren nach einem de Ansprüche 1-11, **dadurch gekennzeichnet, daß** das Verfahren Aufladen der Pulverlackteilchen durch intensives Mischen und Reibung mit magnetischen Trägerteilchen und Transport von Trägerteilchen und Pulverlackteilchen mit Hilfe einer Magnetwalze umfaßt.

13. Verwendung eines Verfahrens nach einem der Ansprüche 1-12 in einem Coil-Coating-Verfahren oder in einem Blechbeschichtungsverfahren.

## Revendications

1. Procédé pour revêtir un substrat métallique avec une composition de peinture en poudre, **caractérisé en ce que** des particules de peinture en poudre sont d'abord chargées par frottement ou par induction en présence de particules magnétiques ou non magnétiques, sont ensuite transportées et sont alors appliquées sur un support de transfert au moyen d'un champ électrique entre le support de transfert et le moyen de transport, et transférées et appliquées par la suite sur le substrat, après quoi la composition de peinture en poudre est durcie ou fondue pour donner un revêtement en poudre.

2. Procédé selon la revendication 1, **caractérisé en ce que** les particules sont chargées par frottement.

3. Procédé selon l'une quelconque des revendications 1-2, **caractérisé en ce que** les particules de peinture en poudre ont une X_{50,3} inférieure à 80 µm et une X_{95,3} inférieure à 120 µm.

4. Procédé selon l'une quelconque des revendications 1-3, **caractérisé en ce que** les particules de peinture en poudre ont une X_{50,3} inférieure à 30 µm et supérieure à 5 µm et une X_{95,3} inférieure à 50 µm.

5. Procédé selon l'une quelconque des revendications 1-4, **caractérisé en ce que** les particules de peinture en poudre ont un rapport X_{75,3} : X_{25,3} < 3.

6. Procédé selon l'une quelconque des revendications 1-5, **caractérisé en ce que** les particules porteuses ont une X_{50,3} inférieure à 180 µm et supérieure à 5 µm et une X_{95,3} inférieure à 200 µm.

7. Procédé selon l'une quelconque des revendications 1-6, **caractérisé en ce que** les particules porteuses ont un rapport X_{75,3}:X_{25,3} < 2.

8. Procédé selon l'une quelconque des revendications 1-7, **caractérisé en ce que** la composition de peinture en poudre comprend un système de liant thermodurcissable.

9. Procédé selon la revendication 8, **caractérisé en ce que** le système de liant se compose d'une résine polyester carboxylée et de l'isocyanurate de tri-glycidyle, une résine époxy, un agent de réticulation contenant un groupe hydroxylamide ou un oxirane aliphatique en tant qu'agent de réticulation, une résine polyester hydroxylée et l'hexaméthoxyméthylmélamine ou un agent de réticulation contenant un groupe isocyanate, une résine époxy avec un agent de réticulation à résine phénolique ou une résine ester époxy avec un agent de réticulation contenant une résine aminée.

10. Procédé selon l'une quelconque des revendications 1-9, **caractérisé en ce que** les particules porteuses magnétiques ou non magnétiques sont choisies parmi les particules porteuses magnétique constituées d'un coeur de fer, d'acier, de nickel, de magnétite, de g-Fe₂O₃, ou de ferrites et de particules porteuses non magnétiques comprenant un verre, un métal non magnétique, une matière polymère et céramique.

11. Procédé selon la revendication 10, **caractérisé en ce que** les particules porteuses sont revêtues ou traitées en surface.

12. Procédé selon l'une quelconque des revendications 1-11, **caractérisé en ce que** le procédé consiste à charger les particules de peinture en poudre au moyen d'un mélange et d'un frottement intensif avec des particules porteuses magnétique et à transporter les particules porteuses et les particules de peinture en poudre à l'aide d'un rouleau magnétique.

13. Utilisation d'un procédé selon l'une quelconque des revendications 1-12 dans un procédé de revêtement à bobine ou dans un procédé de revêtement à feuille.
